# EUROPÄISCHE PATENTSCHRIFT

(11) **EP 2 778 540 B1**
(45) Veröffentlichungstag und Bekanntmachung des Hinweises auf die Patenterteilung: **27.12.2017**
(21) Anmeldenummer: 14000460.7
(22) Anmeldetag: 08.02.2014
(51) Int. Cl.: F24D 5/08, F24J 2/46, F24C 13/00, F24D 11/00, F24D 12/02, F24H 3/04

(54) **Verfahren und Anordnung zum Beheizen von Gebäuden mit einer Infrarot-Heizung**
Method and assembly for heating buildings with infra-red heating
Procédé et dispositif de chauffage de bâtiments par chauffage à infrarouge

(30) Priorität: 11.03.2013 DE 102013004061; 25.10.2013 DE 102013017677
(43) Veröffentlichungstag der Anmeldung: 17.09.2014
(73) Patentinhaber: Kübler GmbH, 67065 Ludwigshafen (DE)
(72) Erfinder: Kübler, Thomas, 68163 Mannheim (DE); Findeisen, Jens, 69469 Weinheim (DE); Rädle, Matthias, 67273 Weisenheim/Berg (DE)
(74) Vertreter: Kesselhut, Wolf

(56) Entgegenhaltungen:
- DE-A1- 10 302 217
- DE-A1-102007 047 661
- GB-A- 2 486 491
- JP-A- S61 125 545
- JP-A- 2000 226 916

## Beschreibung

Die Erfindung betrifft ein Verfahren und eine Anordnung zum Beheizen von Gebäuden mit einer Infrarot-Heizung gemäß dem Oberbegriff von Anspruch 1 und 8.

Derartige Infrarot-Heizungen werden von der Anmelderin seit langem vertrieben und umfassen ein in der Regel horizontal aufgehängtes, nach unten hin offenes Gehäuse, in welchem ein Strahlungsrohr aufgenommen ist, das durch einen Brenner, insbesondere durch einen Gasbrenner, und ein Gebläse mit erhitzter Luft beaufschlagt wird. Aufgrund der hierdurch erzeugten Temperatur der in der Regel schwarzen Außenseite des Strahlungsrohres im Bereich von 300 °C bis 750 °C strahlt dieses Infrarot-Strahlung nach Art eines schwarzen Körpers ab, welche zu einer direkten Erwärmung der Umgebung unterhalb des Strahlungsrohres fuhrt. Hierbei ist es gegenüber herkömmlichen Gebäude-Heizungen, bei denen Heizkörper wie z.B. Radiatoren zum Einsatz gelangen, von Vorteil, dass in einem Gebäude lediglich die Oberflächen von Menschen, Tieren und Gegenständen durch die Infrarotstrahlung erwärmt werden, nicht jedoch das Luftvolumen innerhalb des Gebäudes, so dass die beschriebenen Infrarotheizungen vergleichsweise ökonomisch arbeiten und demgemäß bevorzugt zum Beheizen von Hallen eingesetzt werden.

Bei den bekannten Infrarot-Heizungen der zuvor genannten Art ergibt sich das Problem, dass die Restwärme im erhitzten Gas nach dem Verlassen des Strahlungsrohres nur unzureichend genutzt wird, wodurch sich der Gesamtwirkungsgrad der beschriebenen Infrarot-Heizungen verschlechtert.

Aus der DE 10 2007 047 661 A1 der Anmelderin ist es bekannt, einen Teil der im Abgas von Infrarot-Heizungen in einem ersten Gebäude enthaltenen Restwärme über einen Wärmetauscher zurück zu gewinnen und in einem Pufferspeicher zwischen zu speichern, aus dem die zurückgewonnene Restwärme dann zur Erwärmung von Brauchwasser oder von herkömmlichen Heizkörpern in einem zweiten Gebäude oder einem im ersten Gebäude angeordneten, thermisch isolierten Gebäudeteil, beispielsweise einem vom Hallenbereich isolierten Bürobereich, genutzt werden kann.

Obgleich sich mit der in der DE 10 2007 047 661 beschriebenen Anordnung der Gesamtwirkungsgrad bereits beachtlich steigern lässt, besteht der Wunsch, die Kosten, die bei der Beheizung von Gebäuden mit Infrarot Heizungen entstehen, noch weiter zu verringern, bzw. auf wirtschaftlich sinnvolle Weise regenerative Energien - in diesem Falle Solarenergie - mit einzuspeisen.

Demgemäß ist es eine Aufgabe der vorliegenden Erfindung, ein Verfahren und eine Anordnung zur Durchführung des Verfahrens zu schaffen, mit welchen sich die Kosten bei der Beheizung von Gebäuden, insbesondere von Hallen mit integrierten Teilbereichen, die vom übrigen Bereich der Halle thermisch isoliert sind, mit einer Infrarot-Heizung senken lassen.

Diese Aufgabe wird gemäß der Erfindung durch die Merkmale von Anspruch 1 und 8 gelöst.

Gemäß der Erfindung zeichnen sich ein Verfahren und eine zugehörige Anordnung zum Beheizen von Gebäuden mit einer Infrarot-Heizung, welche ein in einem ersten Gebäude angeordnetes Strahlungsrohr umfasst, dem an einem ersten Ende ein durch einen Brenner erhitztes Gas zugeführt wird, und das an seinem zweiten Ende mit einem Wärmetauscher in Strömungsverbindung steht, der einen Teil der im erhitzten Gas enthaltenen thermischen Energie einem Pufferspeicher zuführt, aus welchem diese insbesondere zur Erwärmung von Brauchwasser oder zur Beheizung eines zweiten, vom ersten Gebäude thermisch isolierten Gebäudeteils oder eines zweiten Gebäudes entnehmbar ist, dadurch aus, dass der Vorlauf und/oder Rücklauf des Wärmetauschers und/oder der Vorlauf und/oder Rücklauf des Pufferspeichers über Leitungen und umschaltbare Ventile mit dem Vorlauf und/oder Rücklauf eines thermischen Solarkollektors strömungsmäßig verbindbar sind.

Anders ausgedrückt umfasst die Erfindung eine spezielle Kombination aus einem Dunkelstrahler-Heizsystem, wie es aus der zuvor erwähnten DE 10 2007 047 661 bekannt ist, mit einem oder mehreren ebenfalls bekannten thermischen Solarkollektoren, durch die sich im Vergleich zu den Einzelsystemen beachtliche Vorteile ergeben, welche nachfolgend näher beschrieben werden.

Wie von der Anmelderin überraschend gefunden wurde, ergeben sich durch die erfindungsgemäße Zusammenschaltung eines thermischen Solarkollektors mit einem eingangs genannten Dunkelstrahler-Heizungssystem zur Beheizung von Hallen zahlreiche Vorteile, die z.B. bei der Zusammenschaltung eines solchen thermischen Solarkollektors mit einer Ölheizung oder klassischen Gasheizung nicht auftreten. Diese Vorteile liegen darin, dass die Wärmetauscher, die in diesen Anlagen verbaut sind, vorzugsweise an der Hallendecke hängen. Dadurch ergeben sich zwischen dem auf dem Hallendach montierten thermischen Solarkollektor und dem Wärmetauscher kurze Leitungswege, die die konvektiven Wärmeverluste verringern und dadurch die unerwünschte Erwärmung der Luft in der durch die Dunkelstrahler beheizten Halle weiter reduzieren. Bei konventionellen Gas- oder Ölheizungen, die in der Regel im Keller oder in einem anderen Gebäude montiert sind, tritt dieser Vorteil aufgrund der vergrößerten Leitungswege nicht auf. Ein weiterer Vorteil ergibt sich dadurch, dass die eingangs beschriebenen Strahlungsheizungssysteme bereits einen Wärmetauscher umfassen, der leicht modifiziert werden kann, um die Zusatzwärme durch den Solarkollektor aufzunehmen.

Die Erfindung wird nachfolgend mit Bezug auf die Zeichnungen anhand von bevorzugten Ausführungsformen näher beschrieben.

In den Zeichnungen zeigen:
- Fig. 1: eine Strahlungsheizungsanrodnung des Standes der Technik mit Wärmetauscher und Pufferspeicher ohne Solarkollektor,
- Fig. 2: eine schematische Darstellung der Leitungsführung der erfindungsgemäßen Strahlungsheizungsanordnung während des Mischheizbetriebs,
- Fig. 3: eine schematische Darstellung der Leitungsführung der erfindungsgemäßen Strahlungsheizungsanordnung während des Abtaubetriebs eines mit Tau oder Schnee bedeckten Solarkollektors, und
- Fig. 4: eine schematische Darstellung der Komponenten und Leitungsführung bei einer bevorzugten Ausführungsform der erfindungsgemäßen Strahlungsheizungsanordnung mit welcher sich sämtliche Betriebsmodi des erfindungsgemäßen Verfahrens durchführen lassen.

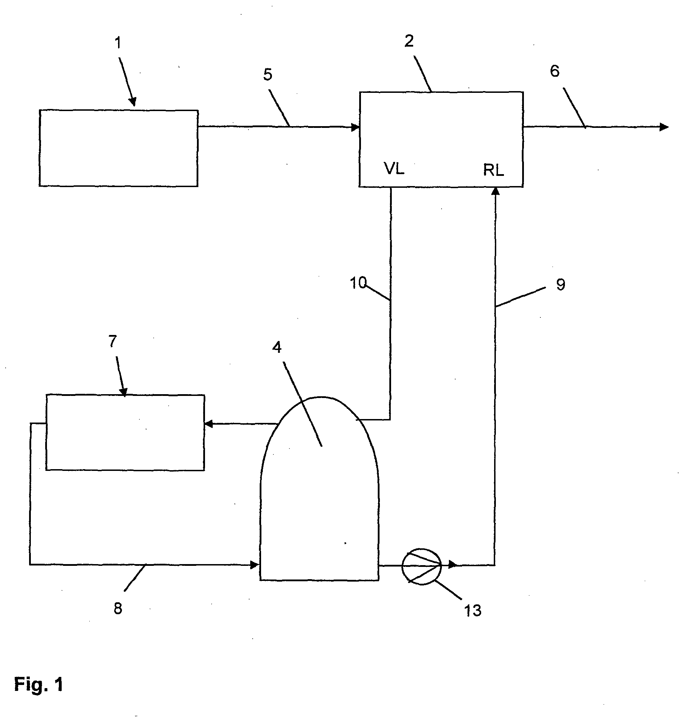

Der normale Betriebsfall einer Strahlungsheizung, die insbesondere für Industriehallen eingesetzt wird, ist aus Figur 1 zu erkennen. Die Figur 1 zeigt hierbei einen als Blockschaubild dargestellten Zusammenschluss einer Dunkelstrahler - Heizung 1 mit einem Wärmetauscher 2 und einem Pufferspeicher 4 sowie den zugehörigen Leitungen und Verbrauchern. Die in der Figur 1 gezeigte Anordnung stellt die Grundanordnung dar, die dazu dient, in sehr effizienter Weise Hallen zu beheizen. Dies geschieht durch Einsatz eines Dunkelstrahlers 1, durch den die Luft in einem nicht näher gezeigten Gebäude möglichst wenig erwärmt wird und sich für die Menschen, die in dem Gebäude, z.B. einer großen Halle, arbeiten, dennoch eine Wohlfühltemperatur einstellt. Wie in der DE 10 2007 047 661 beschrieben ist, deren Inhalt auch zum Gegenstand dieser Anmeldung gemacht wird, wird die nicht als Strahlungswärme abgegebene Leistung teilweise über einen Wärmetauscher 2 zurückgewonnen, wobei hinsichtlich der Einzelheiten auf die genannte Schrift verwiesen wird. Dieser Wärmetauscher 2 wird vorzugsweise ebenfalls unterhalb der Hallendecke montiert.

Die in Figur 1 lediglich schematisch angedeuteten Verbraucher 7 sind über die Leitung 8 mit einem Pufferspeicher 4 verbunden und können insbesondere Heizkörper in einem zweiten Gebäude oder einem thermisch isolierten Teilbereich des Gebäudes sein, in dem auch der Infrarotstrahler 1 angeordnet ist. Ebenso können die Verbraucher jedoch auch die Zwischenspeicher einer vorhandenen klassischen Heizung sein.

Der bei der in Fig. 1 sowie auch den übrigen Figuren eingesetzte Pufferspeicher 4 unterscheidet sich von einem klassischem Wärmespeicher für Öl, Gas oder anderen konventionellen Heizungsanlagen dadurch, dass er bevorzugt mit einer größeren Wärmekapazität ausgeführt ist. Die größere Ausführung der Wärmekapazität des Pufferspeichers 4 führt dazu, dass die thermische Trägheit - im regelungstechnischen Sinne einer I-Strecke - bei Strahlungsheizungen größer ausfällt, als bei klassischen Heizungen, die die Wärme ausschließlich über Fußbodenheizungen oder Heizkörper einspeisen. Wie nachfolgend noch näher ausgeführt wird, ist die gegenüber herkömmlichen klassischen Heizungen erhöhte Wärmespeicherkapazität des Pufferspeichers 4 in Verbindung mit der erfindungsgemäßen Lösung vorteilhaft.

Dies ergibt sich dadurch, dass die normale Betriebsart der Infrarot-Heizungen der Taktbetrieb ist. Beim Taktbetrieb gibt der Betreiber der Halle eine gewünschte Solltemperatur in der Halle vor, und der Infrarot- Strahler 1 schaltet ein und heizt die in der Halle befindlichen Gegenstände und Personen sowie einen Referenzpunkt, der die Messstelle darstellt, auf. Die Restwärme des Abgases 5, 6, die nicht als Strahlungswärme genutzt wird, wird über den Wärmetauscher 2 an den Pufferspeicher 4 abgegeben. Dieser Pufferspeicher 4 kann als gemischter Speicher ausgeführt sein; ist jedoch in besonders vorteilhafter Weise ein bekannter Schichtspeicher mit einem oder mehreren Heißwasserzu- und Abläufen im oberen Bereich und einem oder mehreren Kaltwasserzu- und Abläufen im unteren Bereich. Im Falle des Schichtspeichers wird die Wärme im oberen Teil des Speichers abgeführt, und der kältere Anteil der Flüssigkeit, bei der es sich bevorzugt um Wasser handelt, aus einem Anschluss im unteren Teil des Speichers 4 durch eine Pumpe 13 über die Leitung 9 über den Rücklauf RL in den Wärmetauscher 2 gefördert. Über die heißen Abgase 5, 6 wird das aus dem Pufferspeicher 4 entnommene Kaltwasser im Wärmetauscher 2 aufgeheizt und im Kreislauf über die Leitung 10 wieder in den oberen Teil des Pufferspeichers 4 eingeleitet.

Im letzten Fall wird eine sogenannte Rücklaufanhebung der Temperatur des Heizungsrücklaufes durch die aus dem Abgas 5, 6, des Dunkelstrahlers 1 entzogene Restwärme erreicht.

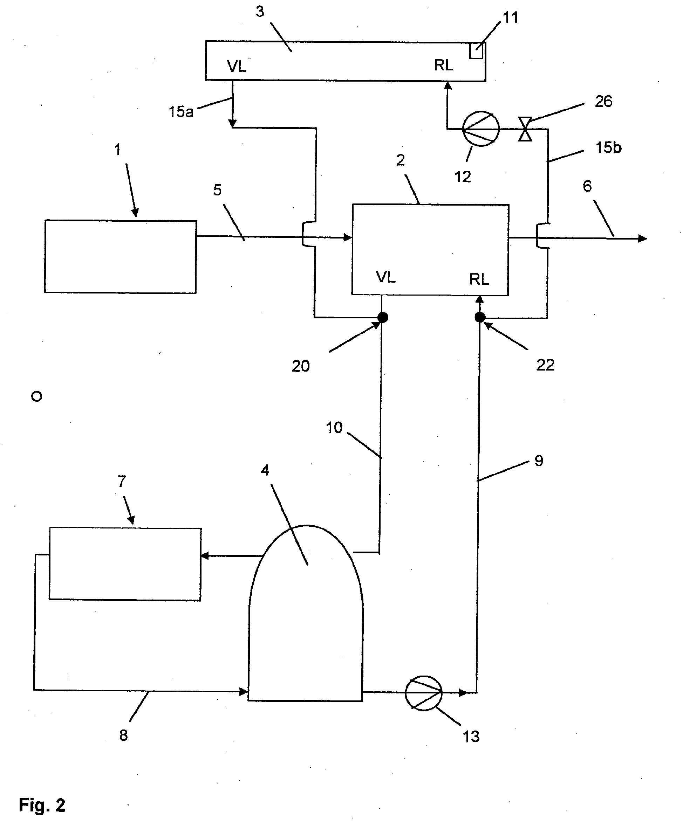

Gemäß der in der Figur 2 dargestellten Ausführungsform einer erfindungsgemäßen Strahlungsheizungsanordnung zur Durchführung des erfindungsgemäßen Verfahrens, die nachfolgend auch als Mischheiz-Anordnung bezeichnet wird, ist in die Zuleitung 9 zum Rücklauf RL des Wärmetauschers 2 sowie in die Leitung 10, die den Vorlauf VL des Wärmetauschers 2 mit dem Einlass an der Oberseite des Pufferspeichers 4 verbindet, zusätzlich ein bekannter thermischer Solarkollektor 3 eingebunden. Hierdurch eröffnet sich die Möglichkeit, dass insbesondere in der Übergangszeit, aber auch in geringerem Maße in der Winterzeit, selbst dann Solarleistung aus dem solarthermischen Kollektor 3 entnommen werden kann, wenn dies mit herkömmlichen Solarkollektoren alleine mitunter schon nicht mehr möglich oder in hohem Maße ineffizient ist.

Um dies zu erreichen ist der Vorlauf VL des Solarkollektors 3 strömungsmäßig über eine Leitung 15a und ein Abzweigstück 20, z.B. ein T-Stück oder Y-Stück, mit der Zuleitung 10 verbunden, die vom Vorlauf VL des Wärmetauschers 2 zu einem oberen Einlass des Pufferspeicher 4 führt. Weiterhin ist der Kaltwasser-Ausgang des Pufferspeichers 4 über ein weiteres Abzweigstück 22, z.B. ein T-Stück oder Y-Stück in der Leitung 9, die vom unteren Teil des Pufferspeichers 4 zum Rücklauf RL des Wärmetauschers 2 führt, über eine Zuleitung 15b mit dem Rücklauf RL des Solarkollektors 3 verbunden. In der Zuleitung 15b befindet sich eine Solarpumpe 12 und gegebenenfalls ein Absperrventil 26, deren Förderleistung in Abhängigkeit von der Intensität der Sonnenstrahlung verändert wird, welche durch einen bekannten Intensitätssensor 11 erfasst wird.

Das von der Solarpumpe 12 durch den Solarkollektor 3 geförderte und in diesem erwärmte Wasser, welches aus dem Vorlauf VL austritt, wird zur Erhöhung der Temperatur bei geringer Sonneneinstrahlung und/oder niedrigen Umgebungstemperaturen im ersten Abzweigstück 20 mit dem Wasser vermischt, welches im Wärmetauscher 2 beim Betrieb der Infrarot-Heizung 1 erhitzt wurde und aus dem Vorlauf VL austritt. Hierdurch wird die Temperatur des im Solarkollektor 3 erwärmten Wassers, die z.B. lediglich 30 °C beträgt, und zu gering ist, um direkt in den thermischen Verbrauchern 7 oder als Brauchwasser genutzt zu werden, auf eine nutzbare Temperatur von z.B. 60 °C erhöht, bevor das Wasser in den Pufferspeicher 4 eingeleitet wird.

Der Solarkollektor 3, der hierbei zum Einsatz gelangt, ist bevorzugt auf der Außenseite des Daches des ersten oder zweiten Gebäudes montiert. Dies kann sowohl ein Flachdach, als auch ein Schrägdach/Pultdach sein. Die Sonne trifft insbesondere in mitteleuropäischen, osteuropäischen und nordeuropäischen Ländern mit unregelmäßiger Intensität auf den Kollektor 3 auf. Der Heizbedarf ergibt sich in Abhängigkeit von der Nutzungsweise des Gebäudes; also unterschiedlich am Wochenende und unter der Woche und unterschiedlich Tag und Nacht. Die Dunkelstrahler - Heizung 1 wird dabei entsprechend den erforderlichen Heizbedürfnissen der Halle getaktet ein- und ausgeschaltet und führt die Wärme über das Abgas 5 dem Wärmetauscher 2 zu. In der üblichen Regelung der Dunkelstrahler - Heizung wird diese Wärme über die Leitung 10 an den Pufferspeicher 4 übertragen, und das kühlere Abgas 6 tritt aus dem Wärmetauscher 2 aus. Die Solarenergie wird in einer anderen von der Sonne vorgegebenen Taktung in dieses System eingespeist.

Die übliche Installation einer solarthermischen Anlage ohne Hallenheizung beinhaltet die notwendige Installation der Regelung, der Rohrleitungsführung der Solaranlage vom Dach bis in den Keller/den Heizkeller der industriellen oder privaten Anlage und die Investitionskosten in den Pufferspeicher. Dadurch sind die Leitungen und der oder die Pufferspeicher 4 sowie große Teile der elektronischen Steuerungs- und Regelungseinrichtung bei einer installierten Heizungsanlage gemäß den Figuren 2 bis 4 bereits vorhanden, so dass sich bei einer Nachrüstung der erfindungsgemäßen Lösung in vorteilhafter Weise nur vergleichsweise geringe Zusatzinvestitionen ergeben.

Bei ausreichender Sonneneinstrahlung wird die eingestrahlte Energie in Form von Wärme über die Leitung 15a und die Leitung 10 letztendlich dem Pufferspeicher 4 zugeführt. Der Solarkollektor 3 erhält vom kältesten Punkt des Speichers 4 über die Pumpe 13, die Leitung 9, ein T-Stück und dann die Pumpe12 kaltes Wasser aus dem unteren Bereich des Pufferspeichers 4 und fördert dieses in den Solarkollektor 3. Damit lassen sich, wie ausgeführt, alle bereits vorhandenen Installationen der in Fig. 1 gezeigten Basisanordnung bei einer Nachrüstung des Solarkollektors 3 in vorteilhafter Weise weiter verwenden. Bei heutigen Solaranlagen beträgt der Investitionskostenanteil des Kollektors 3 selbst an der Gesamtanlage in der Regel deutlich weniger als die Hälfte der Gesamtinvestition, woraus sich wiederum der Vorteil der Verbindung des Solarkollektors mit der Dunkelstrahler-Heizung ergibt.

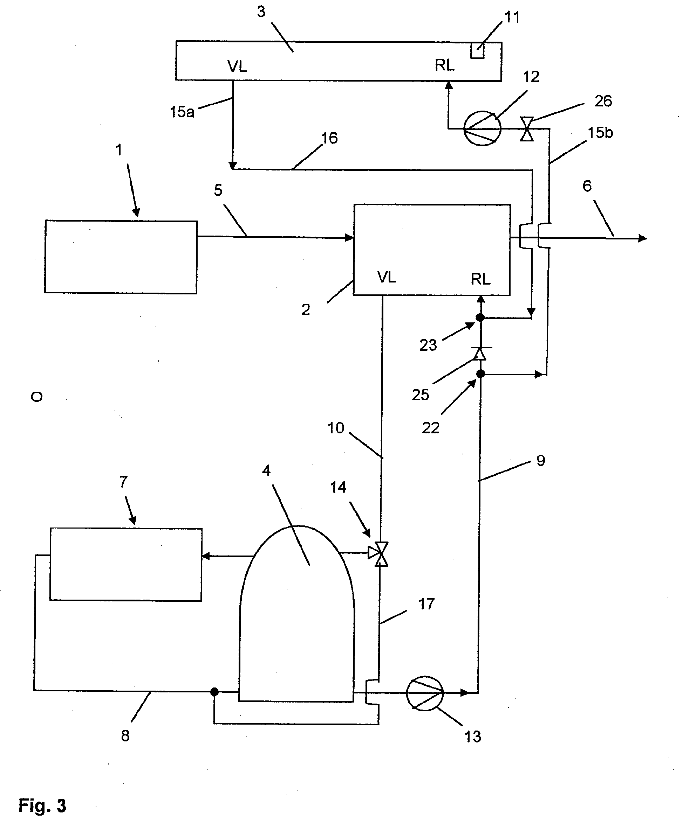

Wie anhand der Darstellung der Figur 3 erkennbar ist, besitzen herkömmliche solarthermische Kollektoren in der Winterzeit das Problem, dass bei Schneefall und anschließendem Sonnenschein - einem Fall der häufig in mitteleuropäischen und angrenzenden Ländern auftritt - keine solarthermische Wärme eingespeist wird, weil Schnee und Eis die solare Einstrahlung verhindern. In diesem Fall kann jedoch nach einem weiteren der Erfindung zugrunde liegenden Gedanken in vorteilhafter Weise das kalte Wasser aus dem unteren Teil des Pufferspeichers 4 dazu genutzt werden, die Oberseite des Solarkollektors 3 von Schnee und Eis zu befreien.

Hierzu wird über die Solarpumpe 12 und die Pumpe 13 kaltes Wasser in den Solarkollektor 3 eingespeist. Das aus dem Vorlauf VL des Solarkollektors 3 austretende Wasser ist in diesem Falle nicht erwärmt sondern wird über das Eis gekühlt. Erfindungsgemäß wird das gekühlte Wasser über die Leitung 16 in den mit RL bezeichneten Rücklauf RL des Wärmetauschers 2 eingeleitet. Um hierbei ein Zurückströmen von gekühltem Wasser aus der Leitung 16 in den Rücklauf RL des Solarkollektors 3 zu verhindern, ist zwischen dem Abzweigstück 23 und dem Abzweigstück 22 ein Rückschlagventil 25 angeordnet, wie dies in Fig. 3 angedeutet ist. Durch diese Leitungsanordnung wird ein minimaler Bedarf an Rohrleitungen ermöglicht. Die Einspeisung des gekühlten Wassers aus dem Vorlauf VL des Solarkollektors 3 erfolgt dabei bevorzugt nur dann, wenn der Dunkelstrahler 1, d.h. die Infrarot-Strahlungsheizung, gerade nicht eingeschaltet ist. In diesem Falle wird das kalte Wasser nur durch den Wärmetauscher 2 geführt und gelangt über die Leitung 10 und ein erstes Drei-Wege-Ventil 14 sowie die Leitungen 17 und 8 zum Kaltwassereinlass im unteren Teil des Pufferspeichers 4. Dies bedeutet, dass schon relativ kaltes Wasser aus dem unteren Teil des Pufferspeichers, welches jedoch eine Temperatur von deutlich mehr als 0°C aufweist, beispielsweise 30°C, durch das Enteisen des Solarkollektor 3 von z.B. 30°C auf 10°C abgekühlt wird und danach an der kältesten Stelle in den unteren Teil des Pufferspeichers 4 eingeleitet wird, der in diesem Falle als Schichtspeicher ausgestaltet ist.

Durch die in der Figur 3 gezeigte Ausgestaltung der erfindungsgemäßen Anordnung ergibt sich der Vorteil, dass keinerlei Wärmeenergie verschwendet und keine Vermischung zwischen kaltem und heißem Wasser herbeigeführt wird, wodurch sich der Wirkungsgrad verbessert. Wenn der Dunkelstrahler 1 eingeschaltet wird, wird das sehr kalte Wasser aus dem Vorlauf VL des Solarkollektors 3 über die Leitung 16 und das Abzweigstück 23 in den Wärmetauscher 2 geleitet. In diesem Fall kann das heiße Abgas 5 aus dem Infrarot-Strahler 1 besonders stark herunter gekühlt werden, was in vorteilhafter Weise die Nutzung der Kondensationswärme des Abgases des Dunkelstrahlers in erheblichem Maße ermöglicht. Dies führt wiederum zu einer deutlichen Erhöhung des Wirkungsgrads des Gesamtsystems. Das Wasser verlässt in diesem Falle den Wärmetauscher 2 als heißes oder warmes Wasser und wird über das erste 3-Wege-Ventil 14 bevorzugt in den oberen Bereich des Speichers 4 eingeleitet.

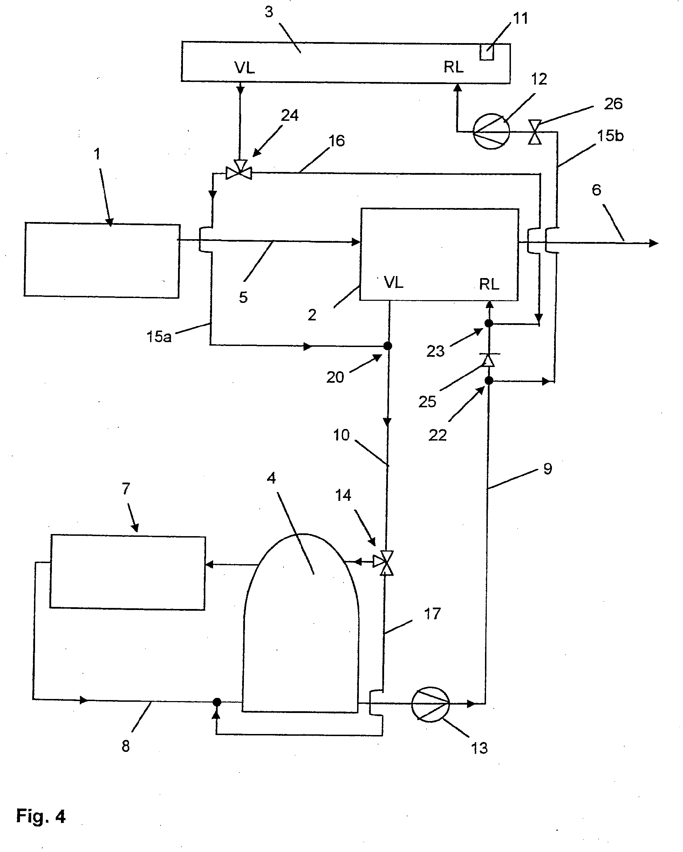

Durch die in der Figur 3 sowie auch Figur 4 angedeutete erfindungsgemäße Anordnung sowie das in den Ansprüchen beschriebene erfindungsgemäße Verfahren lässt sich weiterhin das ebenfalls bekannte Problem überkommen, dass bei den bekannten solarthermischen Kollektoren 3 in den frühen Morgenstunden der Taupunkt unterschritten wird, wenn die Außentemperaturen über dem Gefrierpunk liegen und der Solarkollektor nicht von Schnee und Eis bedeckt ist. Das Unterschreiten des Taupunkts führt dazu, dass der an den Kollektorflächen entstehende Tau die Sonnenstrahlen zurückstreut, was die solarthermische Leistung sehr stark vermindert. Über die Anheizung des Solarkollektors durch das Wasser aus dem Pufferspeicher 4, oder auch direkt durch die beim ersten morgentlichen Anfahren des Dunkelstrahlers 1 entstehende Abwärme kann der Tau ohne den zusätzlichen Einsatz von Primärenergie verdunstet werden, wodurch der Solarkollektor 3 innerhalb kürzester Zeit seine volle Leistung erreicht.

Der Sensor 11 detektiert hierbei bevorzugt ebenfalls über die erfasste Intensität der Sonnenstrahlung und/oder die Temperatur des Solarkollektors 3, wann entweder das Eis oder der Schnee weggetaut sind, bzw. wann das Kondensat/der Tau verdunstet ist, woraufhin umgehend auf den in Verbindung mit Fig. 2 beschriebenen Mischheizbetrieb umgeschaltet wird. Hierdurch ergibt sich der Vorteil, dass das Abtauen bzw. das Verdunsten nur wenige Minuten in Anspruch nimmt und anschließend die volle Leistungsfähigkeit des Solarkollektors 3 zur Verfügung steht, um das Wasser im Pufferspeicher 4 zu erwärmen. Ein weiterer Vorteil dieser Ausführungsform der Erfindung besteht darin, dass die zum Auftauen, bzw. zur Tauentfernung eingesetzte thermische Energie normaler Weise wertlos ist, da die Temperatur zu niedrig ist.

Nach einem weiteren der Erfindung zugrunde liegenden Gedanken ergibt sich durch die Anwendung des erfindungsgemäßen Verfahrens, bzw. der zugehörigen Anordnung die Möglichkeit, die Temperatur des solar erwärmten Wassers ohne den Einsatz einer Wärmepumpe oder dergleichen auf ein brauchbares Temperaturniveau zu erhöhen. Der Grund hierfür besteht darin, dass in der Übergangszeit, insbesondere im Frühjahr oder Herbst, bei Außentemperaturen, bei denen üblicherweise eine Heizung benötigt wird, die solarthermischen Kollektoren nicht mehr in der Lage sind, hinreichend Heißwasser mit einer ausreichend hohen Temperatur bereit zu stellen, die von den gängigen herkömmlichen Heizungssystemen für einen wirtschaftlichen Betrieb benötigt wird. Die gleichzeitige Absenkung der Außentemperatur und die damit verbundene Erhöhung der Verluste durch die reduzierten Einstrahlung der flach stehende Sonne führen in der Übergangszeit beispielsweise dazu, dass z.B. nur 40°C Wassertemperatur erreicht werden. Durch die erfindungsgemäße Kombination aus IR-Strahlungsheizung und thermischem Solarkollektor 3 kann die Temperatur des Wassers mit der in Fig. 3 gezeigten Ausführungsform von z.B. 40°C auf 60°C angehoben werden, wodurch dieses direkt in einer herkömmlichen Konvektionsheizung im thermisch isolierten Gebäudeteil nutzbar, bzw. in den oberen Teil des Pufferspeichers 4 einleitbar ist.

Im vorliegenden Anwendungsfall der in Fig. 3 gezeigten Anordnung, bei dem bevorzugt eine Minimal-Fluss-Durchflussregelung erfolgt, wird dies dadurch erreicht, dass über die Leitung 8 Rücklaufwasser, z.B. aus einem herkömmlichen Konvektionsheizkörper 7, mit ca. 30°C in den unteren Teil des Pufferspeichers 4 eintritt, von dort aus über die Pumpen 13 und 12 in den Solarkollektor 3 gefördert wird, in dem es z.B. auf lediglich 40°C erwärmt wird. Das erwärmte Wasser wird dann bei laufendem Dunkelstrahler 1 über die Leitung 16 und das Abzweigstück 23 in den Rücklauf RL des Wärmetauschers 2 gepumpt, um dort weiter auf 60°C oder mehr erhitzt zu werden. Danach wird das Wasser über das erste Drei-Wege-Ventil 14 nutzbringend in den oberen Teil des Pufferspeichers 4 eingeleitet. In diesem Fall kann also ca. 1/3 der Energie durch den thermischen Solarkollektor 3 beigesteuert werden, was ohne den erfindungsgemäßen zusätzlichen Einsatz des Dunkelstrahlers 1 nicht möglich wäre, da ohne diesen die Vorlauftemperatur des Solarkollektors 3 zu gering ist, um die von der Sonne eingestrahlte Wärmeenergie in effizienter Weise direkt thermisch nutzen zu können. Wenn der Dunkelstrahler nicht in Betrieb ist, wird das erste Drei-Wege-Ventil 14 durchgeschaltet, so dass das aus dem Vorlauf VL des Wärmetauschers 2 austretende Wasser, welches in diesem Falle nicht zusätzlich im Wärmetauscher 2 erwärmt wurde, über die Leitung 17 in den unteren Teil des Pufferspeichers 4 eingeleitet wird.

In Figur 4 ist eine weitere vorteilhafte Ausführungsform der erfindungsgemäßen Anordnung mit der gesamten beispielhaften Verrohrung und den notwendigen Pumpen und Ventilen dargestellt, wobei in diesem Falle ein erstes und ein zweites 3-Wege-Ventil 14 und 24 zum Einsatz gelangen, um die Anordnung gemäß den unterschiedlichen Ausführungsformen des erfindungsgemäßen Verfahrens betreiben zu können.

Wie der Darstellung der Fig. 4 hierbei im Detail entnommen werden kann, ist der Vorlauf VL des Solarkollektors 3 in Ergänzung der Anordnung von Fig. 3 über ein zweites 3-Wege-Ventil 24 wahlweise über die Leitung 16 und das T-Stück 23 mit dem Rücklauf RL des Wärmetauschers 2 oder der Zuleitung 10 verbindbar, welche mit dem Vorlauf VL des Wärmetauschers 2 über ein Abzweigstück 23 in Strömungsverbindung steht. Wie bereits zuvor in Verbindung mit der Anordnung von Fig. 3 beschrieben, ist die Zuleitung 10 über das erste weiteres 3-Wege-Ventil 14 wahlweise mit dem Heißwassereinlass im oberen Teil des Pufferspeichers 14 oder über die Leitung 17 mit dem Kaltwassereinlass im unteren Teil des Pufferspeichers 4 verbindbar.

Um die Anordnung der Fig. 4 in der in Fig. 2 angedeuteten Betriebsart Mischbetrieb zu betreiben, werden die Pumpe 13 und die Solarpumpe 12 eingeschaltet. Diese fördern kühles Wasser aus dem unteren Teil des Pufferspeichers 4 über die Leitung 9, das Abzweigstück 22 und die Leitung 15b zum Rücklauf RL des Solarkollektors 3. Das aus dem Solarkollektor 3 austretende erwärmte Wasser, welches hinreichend soweit erwärmt ist, dass es direkt in den Heizeinrichtungen 7 genutzt werden kann, wird anschließend über das zweite 3-Wege-Ventil 24 in die Zuleitung 15a geleitet. Durch diese gelangt es über das Abzweigstück 20 und die Leitung 10 zum ersten 3-Wege-Ventil 14, welches so geschaltet ist, dass das Wasser in den oberen Teil des Pufferspeichers 4 eingeleitet wird. Von dort aus wird das z.B. 60 °C heiße Wasser den Heizeinrichtungen 7 bedarfsweise direkt zugeführt, in denen es einen Teil der enthaltenen Wärmeenergie abgibt, bevor es über die Zuleitung 8 wieder in den unteren Teil des Pufferspeichers 4 eingeleitet wird.

Sollte die Temperatur des aus dem Vorlauf VL des Solarkollektors 3 austretenden Wassers zu gering sein, um direkt in den Heizeinrichtungen 7 genutzt werden zu können, z.B. in der Übergangszeit, so wird für den Fall, dass der Dunkelstrahler 1 nicht in Betrieb ist, das erste 3-Wege-Ventil 14 umgeschaltet und das kühle Wasser über die Leitung 17 in den unteren Teil des Pufferspeichers 4 eingeleitet. Hierfür kann in der Leitung 10 oder aber am ersten 3-Wege-Ventil 14 selbst ein in den Zeichnungen nicht näher gezeigter Temperatursensor vorgesehen sein, in Abhängigkeit von welchem das erste 3-Wege-Ventil 14 umgeschaltet wird, um das Wasser in den oberen oder unteren Teil des Pufferspeichers 4 einzuleiten.

Wird der Dunkelstrahler 1 in diesem Betriebszustand eingeschaltet und wird vom Solarsensor 11 signalisiert, dass die Sonne nur mit geringer Intensität scheint, so wird das zweite 3-Wege-Ventil 24 umgeschaltet und das aus dem Vorlauf VL des Sonnenkollektors 3 austretende kühle Wasser über die Leitung 16 und das Abzweigstück 23 in den Rücklauf RL des Wärmetauschers 2 eingeleitet, um dessen Temperatur soweit anzuheben, dass dieses direkt in den oberen Teil des Pufferspeichers 4 eingeleitet werden kann. Das aus dem Vorlauf VL des Wärmetauschers 2 austretende zusätzlich erwärmte Wasser, dessen Temperatur im Wärmetauscher 2 vorzugsweise auf mehr als 60 °C angehoben wurde, wird über die Leitung 10 und das entsprechend geschaltete erste 3-Wege-Ventil 14 direkt in den oberen Teil des Pufferspeichers 4 eingeleitet, aus welchem es von den Heizeinrichtungen bedarfsweise entnommen und abgekühlt über die Leitung 8 in den unteren Teil des Pufferspeichers zurück geleitet wird.

Wird insbesondere beim ersten Einschalten der Heizungsanlage in den Morgenstunden vom Sensor 11 keinerlei Sonnenintensität erfasst, obgleich der Sonnenaufgang bereits stattgefunden hat, so wird das zweite 3-Wege-Ventil 24 zum Abtauen von Schnee, bzw. zur Beseitigung von Tau vom Kollektor in der Weise geschaltet, dass der Vorlauf VL des Solarkollektors 3 über die Leitung 16 und das Abzweigstück 23 mit dem Rücklauf RL des Wärmetauschers 2 verbunden. Um hierbei ein Einströmen des im Kollektor 3 abgekühlten Wassers über das Abzweigstück 23 in die Zuleitung 15b zu verhindern, befindet sich zwischen den Abzweigstücken 22 und 23 des Kollektorkreislaufs vorzugsweise ein Rückschlagventil 25. Das erste 3-Wege-Ventil 14 wird für den Fall, dass die Temperatur des aus dem Vorlauf VL des Wärmetauschers 2 austretenden Wassers hoch genug ist, um direkt von den Verbrauchern 7 genutzt werden zu können, so geschaltet, dass das Wasser, welches über die Pumpe 13 und die Leitung 9 sowie die Solarpumpe 12 durch den Solarkollektor 3 sowie den Wärmetauscher 2 zirkuliert wird, über die Leitungen 10 in den oberen Teil des Pufferspeichers 4 eingeleitet wird.

Alternativ besteht die Möglichkeit, dass das Auftauen des Kollektors 3 in besonders effizienter Weise vor der ersten Inbetriebnahme des Dunkelstrahlers 1 erfolgt, solang der Dunkelstrahler 1 ausgeschaltet ist. Hierdurch wird sichergestellt, dass nur kaltes Wasser aus dem unteren Teil des Pufferspeichers 4 durch den Solarkollektor 3 gepumpt wird, welches diesen erwärmt, um Schnee und Eis sowie auch Tau von der Oberseite des Kollektors 3 zu entfernen. Das bei abgeschaltetem Dunkelstrahler 1 durch die Leitung 9 aus dem unteren Teil des Pufferspeichers 4 entnommene kalte Wasser wird dazu durch die Solarpumpe 12 über das Abzweigstück 22 und die Zuleitung 15b in den Rücklauf RL des Kollektors 3 eingeleitet und bevorzugt über das zweite 3-Wege-Ventil 24 und die Leitung 15a, das Abzweigstück 20, die Leitung 10, das zweite 3-Wege-Ventil 14 und die Leitung 17 in den unteren Teil des Pufferspeichers 4 zurück gefördert. Hierdurch lässt sich der Wirkungsgrad des Gesamtsystems in vorteilhafter Weise noch weiter erhöhen, da lediglich kaltes Wasser zum Auftauen des Kollektors 3 eingesetzt wird, welches anschießend wieder in den unteren Teil des Pufferspeichers zurück geleitet wird, aus welchem es zur Erwärmung durch den Wärmetauscher 2 bei laufendem Dunkelstrahler 1 entnommen werden kann.

Sobald der Solarsensor 11, der vorzugsweise in die der Sonne zugewandte Kollektorfläche integriert ist, eine hinreichend hohe Sonnenintensität misst, wird das zweite 3-Wege-Ventil 14 umgeschaltet und das aus dem Vorlauf VL des Solarkollektors 3 austretende, durch die Sonnenstrahlung erwärmte Wasser über das Abzweigstück 23 in den Wärmetauscher 2 eingeleitet, in welchem die Temperatur des Wasser beim Einschalten des Dunkelstrahlers 1 vorzugsweise über eine Temperatur von 60 °C angehoben wird, so dass dieses über das entsprechend geschaltete erste 3-Wege-Ventil 14 in den oberen Teil des Pufferspeichers 4 zur direkten Nutzung durch die Verbraucher 7 eingeleitet werden kann. Sollte die Temperatur des im Wärmetauschers 2 erwärmten Wassers geringer sein, was z.B. durch den zuvor erwähnten Sensor in der Zuleitung 10, bzw. im ersten 3-Wege-Ventil erfasst wird, so erfolgt eine Einleitung des Wassers über die Leitung 17 in den unteren Teil des Wärmetauschers.

Schließlich kann für den Fall, dass der Solarkollektor 3 im Winter bei fehlender Sonneneinstrahlung und sehr tiefen Umgebungstemperaturen keinen zusätzlichen Wärmeeintrag liefert, vorgesehen sein, dass die Zirkulation durch den Solarkollektor 3 durch ein der Solarpumpe 12 strömungsmäßig vorgeschaltetes Absperrventil 26 unterbrochen werden kann.

Die Steuerung der Pumpen 12 und 13 sowie des ersten und zweiten 3-Wege-Ventils 14, 24 erfolgt vorzugsweise über eine bekannte, in den Zeichnungen nicht näher gezeigte elektronische Steuerungseinrichtung, die in entsprechender Weise mit den zuvor erwähnten Sensoren verbunden ist.

Die weiteren Merkmale der Erfindung sind in den abhängigen Ansprüchen beschrieben, die hiermit ausdrücklich zum Inhalt der Beschreibung der vorliegenden Anmeldung gemacht werden.

### Bezugszeichenliste

- 1: Infrarot-Heizung
- 2: Wärmetauscher
- 3: Solarkollektor
- 4: Pufferspeicher
- 5: Abgas, das in den Wärmetauscher eintritt
- 6: Abgas, das durch Wärmetauscher austritt
- 7: Verbraucher
- 8: Leitung von Verbraucher zu Kaltwassereingang des Pufferspeichers
- 9: Leitung vom Kaltwasserausgang des Pufferspeichers Abzweigstück /Rücklauf des Wärmetauschers
- 10: Leitung vom Wärmetauscher zum ersten 3-Wege-Ventil
- 11: Sensor für Sonnenintensität
- 12: Solarpumpe
- 13: Pumpe
- 14: erstes 3-Wege-Ventil
- 15a: Leitung vom Vorlauf VL des Solarkollektors zum Abzweigstück 20
- 15b: Leitung vom Abzweigstück 22 in Leitung 9 zum Rücklauf RL des Solarkollektors
- 16: Leitung zwischen dem zweiten 3-Wege-Ventil und Abzweigstück 23 vor dem Rücklauf RL des Wärmetauschers
- 17: Leitung vom ersten 3-Wege-Ventil zum Kaltwassereinlass im unteren Teil des Pufferspeichers
- 20: Abzweigstück in Zuleitung 10
- 22: Abzweigstück in Zuleitung 9
- 23: weiteres Abzweigstück in Zuleitung 9 zwischen Rücklauf RL des Wärmetauschers und Rückschlagventil 25
- 25: Rückschlagventil 25
- 26: Absperrventil

## Patentansprüche

1. Verfahren zum Beheizen von Gebäuden mit einer Infrarot-Heizung (1), welche ein in einem ersten Gebäude angeordnetes Strahlungsrohr umfasst, dem an einem ersten Ende ein durch einen Brenner erhitztes Gas zugeführt wird, und das an seinem zweiten Ende mit einem Wärmetauscher (2) in Strömungsverbindung steht, der einen Teil der im erhitzten Gas enthaltenen thermischen Energie einem Pufferspeicher (4) zuführt, aus welchem diese insbesondere zur Erwärmung von Brauchwasser oder zur Beheizung eines zweiten, vom ersten Gebäude thermisch isolierten Gebäudeteils oder eines zweiten Gebäudes entnehmbar ist,
**dadurch gekennzeichnet,**
**dass** der Vorlauf und/oder Rücklauf des Wärmetauschers (2) und/oder der Vorlauf und/oder Rücklauf des Pufferspeichers (4) über Leitungen und umschaltbare Ventile (14, 24, 26) mit dem Vorlauf und/oder Rücklauf eines thermischen Solarkollektors (3) strömungsmäßig verbindbar sind und der Rücklauf (RL) des Solarkollektors (3) zur Erwärmung des Solarkollektors (3) strömungsmäßig mit dem Kaltwasserausgang des Pufferspeichers (4) verbindbar ist, um auf der Oberseite des Solarkollektors (3) befindliches Eis abzutauen und/oder im Inneren des Kollektors gebildetes Tau zu entfernen.

2. Verfahren nach Anspruch 1,
**dadurch gekennzeichnet,**
**dass** vom Solarkollektor (3) erwärmtes, aus diesem austretendes Wasser zur Erhöhung der Temperatur bei geringer Sonneneinstrahlung und/oder niedrigen Umgebungstemperaturen mit im Wärmetauscher (2) beim Betrieb der Infrarot-Heizung (1) erhitztem Wasser vermischt wird, bevor dieses in den Pufferspeicher (4) eingeleitet wird.

3. Verfahren nach Anspruch 2,
**dadurch gekennzeichnet,**
**dass** der Vorlauf (VL) des Solarkollektors (3) zur Erhöhung der Temperatur des vom Solarkollektor erwärmten Wassers strömungsmäßig über ein Abzweigstück, insbesondere ein T-Stück oder Y-Stück (20), mit dem Vorlauf (VL) des Wärmetauschers (2) verbunden ist, und dass eine Solarpumpe (12) sowie ein die Intensität der Sonnenstrahlung erfassender Sensor (11) vorgesehen sind, durch welche der Fluss von Wasser zum Rücklauf (RL) des Solarkollektors (3) veränderbar ist.

4. Verfahren nach Anspruch 3,
**dadurch gekennzeichnet,**
**dass** der Kaltwasser-Ausgang des Pufferspeichers (4) über ein weiteres Abzweigstück, insbesondere ein T-Stück oder Y-Stück (22), mit dem Rücklauf des Wärmetauschers (2) und dem Rücklauf (RL) des Solarkollektors (3) verbindbar ist.

5. Verfahren nach einem der vorhergehenden Ansprüche,
**dadurch gekennzeichnet,**
**dass** der Vorlauf (VL) des Solarkollektors (3) insbesondere über ein 3-Wege-Ventil (14) strömungsmäßig mit dem Kaltwassereinlass des Pufferspeichers (4) verbindbar ist, um beim Abtauen das Kollektors (3) wahlweise kühles Wasser in den Kaltwassereinlass des Pufferspeichers (4) einzuleiten.

6. Verfahren nach einem der vorhergehenden Ansprüche,
**dadurch gekennzeichnet,**
**dass** der Vorlauf (VL) des Solarkollektors (3) insbesondere über ein Abzweigstück (20) mit dem Vorlauf des Wärmetauschers (2) verbindbar ist, um die Temperatur des im Solarkollektors (3) erwärmten Wassers zusätzlich zu erhöhen, bevor dieses in den Pufferspeicher (4) eingeleitet wird.

7. Anordnung zur Durchführung des Verfahrens nach einem der vorhergehenden Ansprüche, umfassend eine in einem ersten Gebäude angeordnete Infrarot-Heizung (1) mit einem Strahlungsrohr, dem an einem ersten Ende ein durch einen Brenner erhitztes Gas zugeführt wird, und das an seinem zweiten Ende mit einem Wärmetauscher (2) in Strömungsverbindung steht, der einen Teil der im erhitzten Gas enthaltenen thermischen Energie einem Pufferspeicher (4) zuführt, aus welchem diese insbesondere zur Erwärmung von Brauchwasser oder zur Beheizung eines zweiten, vom ersten Gebäude thermisch isolierten Gebäudeteils oder eines zweiten Gebäudes entnehmbar ist,
**dadurch gekennzeichnet,**
**dass** der Vorlauf und/oder Rücklauf des Wärmetauschers (2) und/oder der Vorlauf und/oder Rücklauf des Pufferspeichers (4) über Leitungen und umschaltbare Ventile (14, 24, 26) mit dem Vorlauf und/oder Rücklauf eines thermischen Solarkollektors (3) strömungsmäßig verbindbar sind und der Rücklauf (RL) des Solarkollektors (3) zur Erwärmung des Solarkollektors (3) strömungsmäßig mit dem Kaltwasserausgang des Pufferspeichers (4) verbindbar ist, um auf der Oberseite des Solarkollektors (3) befindliches Eis abzutauen und/oder im Inneren des Kollektors gebildetes Tau zu entfernen.

8. Anordnung nach Anspruch 7,
**dadurch gekennzeichnet,**
**dass** der Pufferspeicher (4) insbesondere ein Schichtenspeicher ist, und dass der Vorlauf (VL) des Solarkollektors (3) durch ein 3-Wege-Ventil (24) wahlweise über eine Zuleitung (16) mit dem Rücklauf des Wärmetauschers (2) oder über eine Zuleitung (15a) und ein Abzweigstück (20) mit dem Vorlauf des Wärmetauschers (2) verbindbar ist, und dass das Abzweigstück (20) durch eine Zuleitung (10) und ein stromabwärtiges weiteres 3-Wege-Ventil (14) wahlweise mit einem Heißwassereinlass im oberen Teil des Pufferspeichers (4) oder einem Kaltwassereinlass im unteren Teil des Pufferspeichers (4) verbindbar ist.

9. Anordnung nach Anspruch 8,
**dadurch gekennzeichnet,**
**dass** der Kaltwasser-Ausgang des Pufferspeichers (4) über ein Zuleitung (9) und ein weiteres Abzweigstück (22), insbesondere ein T-Stück oder Y-Stück, mit dem Rücklauf (RL) des Solarkollektors (3) sowie dem Rücklauf des Wärmetauschers (2) verbindbar ist, und dass der Vorlauf (VL) des Solarkollektors (3) über eine Leitung (16) und ein Abzweigstück (23) mit dem Rücklauf des Wärmetauchers (2) verbindbar ist.

## Claims

1. A method of heating buildings with an infra-red heater (1), which comprises a radiant tube disposed in a first building, which radiant tube is supplied with a gas, heated by a burner, at a first end, and at a second end is fluidically connected to a heat exchanger (2), which supplies part of the thermal energy contained in the heated gas to a buffer storage tank (4), from which this thermal energy can be removed, in particular to warm up service water or to heat a second building part that is thermally insulated from the first building, or to heat a second building,
**characterised in that**
the feed and/or return of the heat exchanger (2) and/or the feed and/or return of the buffer storage tank (4) can be fluidically connected by way of lines and switchable valves (14, 24, 26) to the feed and/or return of a thermal solar collector (3), and the return (RL) of the solar collector (3) can be fluidically connected to the cold water outlet of the buffer storage tank (4) to heat up the solar collector (3) in order to thaw ice located on the surface of the solar collector (3) and/or to remove dew formed inside the collector.

2. The method according to claim 1,
**characterised in that**
in order to increase its temperature when there is little sunlight and/or when there are low ambient temperatures, the water warmed by and emerging from the solar collector (3)is mixed with water heated in the heat exchanger (2) during operation of the infrared heater (1), before feeding the water into the buffer storage tank (4) .

3. The method according to claim 2,
**characterised in that**
in order to increase the temperature of the water warmed by the solar collector (3), the feed (VL) of the solar collector is fluidically connected via a branch piece, in particular a T-piece or Y-piece (20), to the feed (VL) of the heat exchanger (2), and **in that** a solar pump (12) and a sensor (11) recording the intensity of the solar radiation are provided, enabling the flow of water to the return (RL) of the solar collector (3) to be altered.

4. The method according to claim 3,
**characterised in that**
the cold water outlet of the buffer storage tank (4) can be connected via a further branch piece, in particular a T-piece or Y-piece (22), to the return of the heat exchanger (2) and the return (RL) of the solar collector (3).

5. The method according to any one of the preceding claims,
**characterised in that**
the feed (VL) of the solar collector (3) can be fluidically connected to the cold water inlet of the buffer storage tank (4), in particular via a three-way valve (14), in order to selectively introduce cold water into the cold water inlet of the buffer storage tank (4) when thawing the collector (3) .

6. The method according to any one of the preceding claims,
**characterised in that**
the feed (VL) of the solar collector (3) can be connected to the feed of the heat exchanger (2), in particular via a branch piece (20), in order to additionally increase the temperature of the water warmed in the solar collector (3) before feeding the water into the buffer storage tank (4).

7. An arrangement for carrying out the method according to any one of the preceding claims, comprising an infrared heater (1) disposed in a first building and having a radiant tube, which is supplied with a gas, heated by a burner, at a first end, and at a second end is fluidically connected to a heat exchanger (2), which supplies part of the thermal energy contained in the heated gas to a buffer storage tank (4), from which this thermal energy can be removed, in particular to warm up service water or to heat a second building part that is thermally insulated from the first building, or to heat a second building,
**characterised in that**
the feed and/or return of the heat exchanger (2) and/or the feed and/or return of the buffer storage tank (4) can be fluidically connected by way of lines and switchable valves (14, 24, 26) to the feed and/or return of a thermal solar collector (3), and the return (RL) of the solar collector (3) can be fluidically connected to the cold water outlet of the buffer storage tank (4) to heat up the solar collector (3) in order to thaw ice located on the surface of the solar collector (3) and/or to remove dew formed inside the collector.

8. The assembly according to claim 7,
**characterised in that**
the buffer storage tank (4) is in particular a stratified storage tank, and **in that** the feed (VL) of the solar collector (3) can be connected by a three-way valve (24) selectively to the return of the heat exchanger (2) via a feed line (16) or to the feed of the heat exchanger (2) via a feed line (15a) and a branch piece (20), and **in that** the branch piece (20) can be connected by a feed line (10) and a downstream further three-way valve (14) selectively to a hot water inlet in the upper part of the buffer storage tank (4) or to a cold water inlet in the lower part of the buffer storage tank (4) .

9. The assembly according to claim 8,
**characterised in that**
the cold water outlet of the buffer storage tank (4) can be connected via a feed line (9) and a further branch piece (22), in particular a T-piece or Y-piece, to the return (RL) of the solar collector (3) and to the return of the heat exchanger (2), and **in that** the feed (VL) of the solar collector (3) can be connected via a line (16) and a branch piece (23) to the return of the heat exchanger (2).

## Revendications

1. Procédé de chauffage de bâtiments par chauffage à infrarouge (1) comprenant un tube radiant disposé dans un premier bâtiment, auquel est amené, à une première extrémité, un gaz chauffé par un brûleur et dont la seconde extrémité est en communication fluidique avec un échangeur de chaleur (2) qui achemine une partie de l'énergie thermique contenue dans le gaz chauffé vers un accumulateur tampon (4) dans lequel celle-ci peut être prélevée notamment pour chauffer l'eau sanitaire ou pour chauffer une deuxième partie de bâtiment, isolée thermiquement du premier bâtiment, ou un deuxième bâtiment,
**caractérisé en ce que**
la partie aller et/ou la partie retour de l'échangeur de chaleur (2) et/ou la partie aller et/ou la partie retour de l'accumulateur tampon (4) peuvent être mises en communication fluidique avec la partie aller et/ou la partie retour d'un collecteur solaire thermique (3) par l'intermédiaire de conduites et de vannes réversibles (14, 24, 26), et pour chauffer le collecteur solaire (3), la partie retour (RL) du collecteur solaire (3) peut être mise en communication fluidique avec la sortie d'eau froide de l'accumulateur tampon (4), afin d'enlever le givre sur le dessus du collecteur solaire (3) et/ou d'éliminer la rosée formée à l'intérieur du collecteur.

2. Procédé selon la revendication 1,
**caractérisé en ce que**
pour augmenter la température par faible ensoleillement et/ou faibles températures ambiantes, l'eau chauffée par le collecteur solaire (30), et sortant de celui-ci, peut être mélangée avec l'eau chauffée dans l'échangeur de chaleur (2) pendant le fonctionnement du chauffage à infrarouge (1), avant que celle-ci ne soit injectée dans l'accumulateur tampon (4).

3. Procédé selon la revendication 2,
**caractérisé en ce que**
pour augmenter la température de l'eau chauffée par le collecteur solaire (3), la partie aller (VL) du collecteur solaire (3) est en communication fluidique avec la partie aller (VL) de l'échangeur de chaleur (2) par l'intermédiaire d'un raccord, notamment un raccord en T ou raccord en Y (20), et **en ce qu'**il est prévu une pompe solaire (12) ainsi qu'un capteur (11) détectant l'intensité de l'ensoleillement, grâce auxquels le flux d'eau vers la partie retour (RL) du collecteur solaire (3) peut être modifié.

4. Procédé selon la revendication 3,
**caractérisé en ce que**
par l'intermédiaire d'un autre raccord, notamment un raccord en T ou un raccord en Y (22), la sortie d'eau froide de l'accumulateur tampon (4) peut être mise en communication avec la partie retour de l'échangeur de chaleur (2) et la partie retour (RL) du collecteur solaire (3).

5. Procédé selon l'une des revendications précédentes,
**caractérisé en ce que**
la partie aller (VL) du collecteur solaire (3) peut être mise en communication fluidique avec l'entrée d'eau froide de l'accumulateur tampon (4), notamment par l'intermédiaire d'une vanne à trois voies (14), afin d'injecter optionnellement de l'eau froide dans l'entrée d'eau froide de l'accumulateur tampon (4) lors du dégivrage du collecteur (3).

6. Procédé selon l'une des revendications précédentes,
**caractérisé en ce que**
la partie aller (VL) du collecteur solaire (3) peut être mise en communication avec la partie aller de l'échangeur de chaleur (2), notamment par l'intermédiaire d'un raccord (20), afin d'augmenter encore la température de l'eau chauffée dans le collecteur solaire (3), avant que celle-ci ne soit injectée dans l'accumulateur tampon (4).

7. Dispositif pour la mise en oeuvre du procédé selon l'une des revendications précédentes, comprenant un chauffage à infrarouge (1) disposé dans un premier bâtiment, comprenant un tube radiant auquel est amené, à une première extrémité, un gaz chauffé par un brûleur, et dont la seconde extrémité est en communication fluidique avec un échangeur de chaleur (2) qui achemine une partie de l'énergie thermique contenue dans le gaz chauffé vers un accumulateur tampon (4), dans lequel celle-ci peut être prélevée notamment pour chauffer l'eau sanitaire ou pour chauffer une deuxième partie de bâtiment, isolée thermiquement du premier bâtiment, ou un deuxième bâtiment,
**caractérisé en ce que**
la partie aller et/ou la partie retour de l'échangeur de chaleur (2) et/ou la partie aller et/ou la partie retour de l'accumulateur tampon (4) peuvent être mises en communication fluidique avec la partie aller et/ou la partie retour d'un collecteur solaire thermique (3) par l'intermédiaire de conduites et de vannes réversibles (14, 24, 26), et pour chauffer le collecteur solaire (3), la partie retour (RL) du collecteur solaire (3) peut être mise en communication fluidique avec la sortie d'eau froide de l'accumulateur tampon (4), afin d'enlever le givre sur le dessus du collecteur solaire (3) et/ou d'éliminer la rosée formée à l'intérieur du collecteur.

8. Dispositif selon la revendication 7
**caractérisé en ce que**
l'accumulateur tampon (4) est notamment un accumulateur stratifié, et **en ce que** la partie aller (VL) du collecteur solaire (3) peut être mise en communication par une vanne à trois voies (14) au choix par l'intermédiaire d'une conduite d'amenée (16) avec la partie retour de l'échangeur de chaleur (2) ou par l'intermédiaire d'une conduite d'amenée (15a) et d'un raccord (20) avec la partie aller de l'échangeur de chaleur (2), et **en ce que** le raccord (20) peut être mise en communication par une conduite d'amenée (10) et une autre vanne à trois voies (14) montée en aval au choix avec une entrée d'eau chaude dans la partie supérieure de l'accumulateur tampon (4) ou une entrée d'eau froide dans la partie inférieure de l'accumulateur tampon (4).

9. Dispositif selon la revendication 8,
**caractérisé en ce que**
la sortie d'eau froide de l'accumulateur tampon (4) peut être mise en communication, par l'intermédiaire d'une conduite d'amenée (9) et d'un autre raccord (22), notamment un raccord en T ou un raccord en Y, avec la partie retour (RL) du collecteur solaire (3) ainsi que la partie retour de l'échangeur de chaleur (2), et **en ce que** la partie aller (VL) du collecteur solaire (3) peut être mise en communication, par l'intermédiaire d'une conduite (16) et d'un raccord (23), avec la partie retour de l'échangeur de chaleur (2).
